# FASCICULE DE BREVET EUROPEEN

(11) **EP 1 071 927 B1**
(45) Date de publication et mention de la délivrance du brevet: **24.09.2003**
(21) Numéro de dépôt: 99913407.5
(22) Date de dépôt: 14.04.1999
(51) Int. Cl.: G01D 5/20, G01B 7/02, G01B 7/04

(54) **DISPOSITIF DE MESURE INCREMENTALE DE POSITION**
INKREMENTALER POSITIONSGEBER
DEVICE FOR INCREMENTAL MEASUREMENT OF POSITION

(30) Priorité: 16.04.1998 FR 9805041
(43) Date de publication de la demande: 31.01.2001
(73) Titulaire: Bazenet, Jean-Pierre, 69160 Tassin (FR)
(72) Inventeur: Bazenet, Jean-Pierre, 69160 Tassin (FR)
(86) Numéro de dépôt international: FR9900873
(87) Numéro de publication internationale: WO99054687

(56) Documents cités:
- WO-A-89/02570
- FR-A- 2 421 365
- FR-A- 2 637 683
- L.F. SHREW: "Magnetic Null Transducer. October 1963." IBM TECHNICAL DISCLOSURE BULLETIN, vol. 6, no. 5, octobre 1963 (1963-10), page 63 XP002088616 New York, US

## Description

La présente invention se rapporte à un dispositif de mesure incrémentale de déplacement et de position de deux objets mobiles en translation l'un par rapport à l'autre.

Des dispositifs de ce type sont connus par exemple par les demandes de brevets WO 89/02570 et WO 91/04459. Ces dispositifs comprennent une règle reliée à l'un des deux objets et qui est constituée par un ruban métallique comprenant une graduation formée d'une succession longitudinale d'ajours selon un pas p et ayant une largeur de p/2, ainsi qu'un détecteur électromagnétique relié à l'autre desdits objets et explorant la graduation de la règle, pour donner un signal de mesure représentatif du déplacement.

Suivant la demande WO 89/02570, le détecteur qui peut être par exemple magnétique, magnétorésistif, inductif ou capacitif peut comprendre une partie unique placée d'un côté du ruban ajouré.

Suivant la demande WO.91/04459, la détection peut être effectuée en utilisant un aimant permanent générateur de champ magnétique et un élément détecteur de champ magnétique disposé du même côté de la règle, mais il est également envisagé d'utiliser une détection inductive basée sur les pertes par courants de Foucault dans la règle entre les ajours. Dans tous les cas c'est la variation d'une induction qui produit le signal de mesure, ce qui fonctionne avec les deux limites suivantes de résolution ou de définition :

En utilisation industrielle, un jeu dans le guidage de la règle est nécessaire pour permettre le passage des copeaux souvent entraînés par la règle, ainsi que le libre défilement de celle-ci à vitesse élevée.

Il s'en suit un battement de la règle qui s'éloigne et se rapproche du détecteur en faisant varier la forme et l'amplitude du signal détecté. De plus, selon les lois de l'induction magnétique, les variations de vitesse de défilement de la règle entraînent des variations d'amplitude et de forme des signaux impropres à leur traitement et donc à une exploitation autre que tout ou rien. Ceci limite la résolution obtenue au pas des ajours, qu'il n'est pas possible de réduire à volonté avec des moyens simples.

Afin de pallier ces différents inconvénients, l'invention se propose de réaliser un dispositif de mesure de déplacement et de position, du type à ruban métallique ajouré qui, par rapport aux dispositifs de l'art antérieur, possède une moindre sensibilité du signal de mesure au battement de la règle et à ses variations de vitesse. Le but de l'invention est l'obtention d'un signal stable, donc aisément exploitable, permettant une résolution, ou définition, plus élevée que dans l'art antérieur.

A cet effet, l'invention a pour objet un dispositif de mesure incrémentale de déplacement et de position de deux objets mobiles en translation l'un par rapport à l'autre, comprenant une règle reliée à un des deux objets et constituée par un ruban métallique comprenant une graduation formée d'une rangée longitudinale d'ajours qui sont répartis suivant un pas p et qui présentent, dans le sens de la longueur de la règle, une dimension de p/2, un détecteur relié à l'autre desdits objets et explorant la graduation de la règle, ce détecteur comprenant deux parties situées sur les côtés opposés de la règle, et un circuit d'exploitation du signal de mesure du détecteur, caractérisé par le fait que le détecteur comprend un émetteur disposé d'un côté de la règle et comprenant au moins une bobine alimentée avec un signal électrique monotension pulsé à haute fréquence et adaptée pour produire un champ életromagnétique à haute fréquence concentré sur la règle, et un récepteur disposé sur le côté opposé de la règle, en regard de la bobine de l'émetteur et adapté pour produire par induction un signal électrique haché à haute fréquence et modulé en amplitude par la règle en déplacement, entre une amplitude élevée lorsqu'un ajour de la règle se trouve entre la bobine de l'émetteur et le récepteur, et une amplitude faible lorsqu'un intervalle entre deux ajours successifs de la règle se trouve entre la bobine de l'émetteur et le récepteur.

On entend par signal électrique monotension pulsé à haute fréquence un signal à partir de fréquences de l'ordre de 1 MHz.

L'utilisation de ces fréquences élevées permet, par rapport à des fréquences plus basses, par exemple de l'ordre de quelques dizaines de KHz, de s'affranchir des dérives d'amplitude et de forme des signaux, liées aux variations thermiques et au carré de la vitesse de défilement de la règle.

Un émetteur est disposé d'un côté de la règle et comprend au moins une bobine alimentée avec un signal électrique pulsé monotension pour produire un champ électromagnétique à haute fréquence.

Un récepteur ou antenne est disposé sur le côté opposé de la règle face à l'émetteur et accordé pour recevoir la transmission du signal haute fréquence. Par la suite, cette antenne est représentée sous la forme non limitative d'une bobine. Pour simplifier la représentation, tout autre récepteur à effet de champ HF pourrait être utilisé aussi.

Par effet d'écran Faraday, le déplacement de la règle module le signal haute fréquence transmis entre une amplitude élevée, lorsqu'un ajour de la règle laisse passer l'émission de l'émetteur au récepteur, et une amplitude faible lorsqu'un intervalle métallique entre deux ajours coupe cette transmission. Les bobines et leur entrefer étant fixes, la transmission ne peut varier qu'en présence de la règle qui se comporte simplement comme un écran relié à la terre, le battement de la règle n'ayant que très peu d'effet, le signal obtenu est très stable.

D'autre part, le signal est d'autant plus stable que la détection devient très peu dépendante de la nature du métal, de la conductivité de la règle, ou de son magnétisme et de sa vitesse de défilement. On obtient ainsi un signal de mesure de forte amplitude, très facilement exploitable avec une émission HF à partir de fréquences de l'ordre de 1 MHz. Un détecteur peut avantageusement être constitué par deux groupes d'émetteur/récepteur et dans ce cas les deux groupes sont décalés selon la direction longitudinale de la règle et séparés de n x p + p/2, n étant un nombre entier. Ainsi, un intervalle métallique entre deux ajours se trouve entre un émetteur et un récepteur, lorsqu'un ajour se trouve entre l'autre émetteur et son récepteur.

Dans le cadre de l'invention, chaque bobine peut comprendre un bobinage disposé dans un pot en ferrite dont la dimension, dans le sens de la longueur de la règle, correspond sensiblement à la dimension p/2 des ajours dans le sens de la longueur de la règle.

Suivant un mode de réalisation avantageux de l'invention, les deux bobines du récepteur sont reliées chacune par un amplificateur et un redresseur, à un même amplificateur de sommation fournissant, lors du déplacement longitudinal de la règle, un signal de sortie alternatif sinusoïdal.

Suivant un autre mode de réalisation avantageux de l'invention, chaque bobine réceptrice reçoit en parallèle un moyen d'accord à la fréquence d'émission, en particulier une capacité fixe, et un moyen d'établissement de la symétrie des niveaux de réception des deux bobines, en particulier une capacité variable.

Les dessins annexés décrivent plus en détail un mode de réalisation non limitatif de l'invention.
- la figure 1 est une coupe longitudinale schématique de la règle et du détecteur d'un dispositif conforme à l'invention ;
- la figure 2 est une vue en plan partielle de la règle du détecteur ;
- les figures 3a, 3b et 3c représentent le signal du détecteur des figures 1 et 2;
- la figure 4 représente le schéma électrique du détecteur des figures 1 et 2 et du circuit de mise en forme de son signal de mesure;
- les figures 5a et 5d montrent les formes du signal en différents points du circuit de mise en forme de la figure 4.

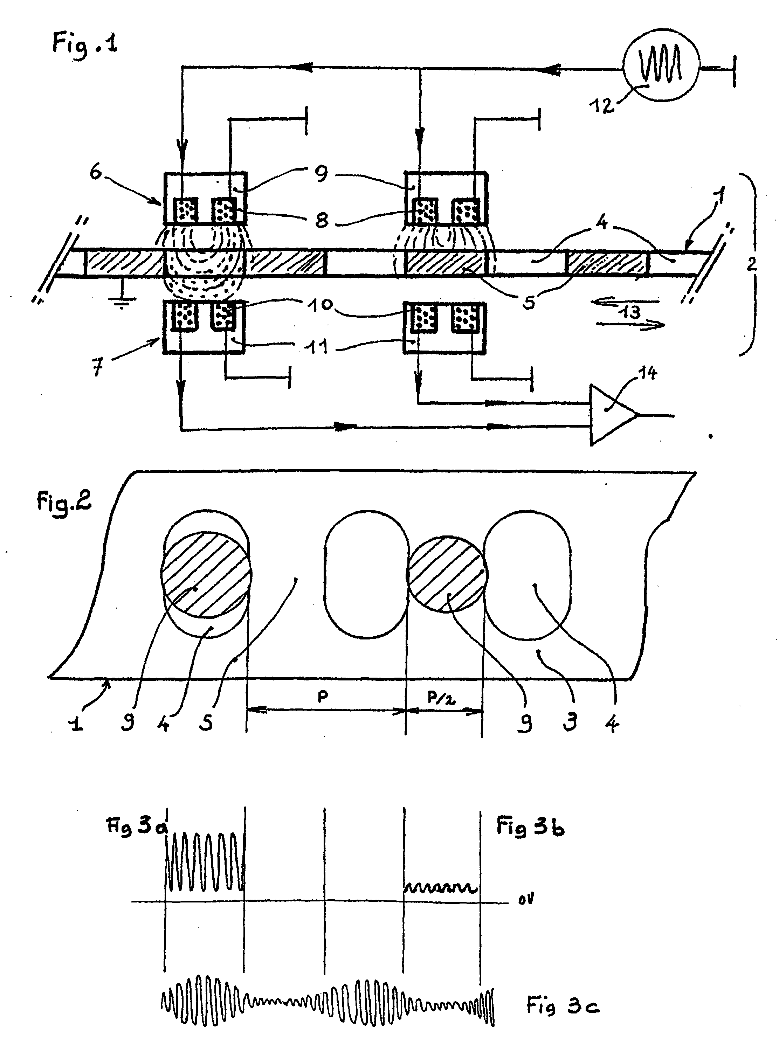

Les figures 1 et 2 illustrent un dispositif de mesure incrémentale de déplacement et de position de deux objets mobiles en translation l'un par rapport à l'autre, dont les caractéristiques générales correspondent à l'enseignement de WO-A-89/02570 et WO-A-91/04456. Ce dispositif comprend une règle 1 reliée à l'un des deux objets et un détecteur 2 relié à l'autre objet et qui explore la règle 1.

La règle 1 est constituée par un ruban de métal, par exemple d'acier inoxydable; comprenant une graduation formée d'une succession longitudinale d'ajours 4, de pas p. Les ajours présentent, selon la longueur de la règle 1, une largeur p/2 et sont séparés par des intervalles 5 présentant une largeur p/2 également selon la longueur de la règle.

Le détecteur 2 comprend une partie émettrice 6 disposée d'un côté de la règle 1 et une partie réceptrice 7 disposée sur le côté opposé de la règle 1.

La partie émettrice 6 comprend, dans un support commun non représenté, deux bobines émettrices 8 disposées chacune dans une carcasse 9 constituée par exemple par un pot en ferrite, de manière que les bobines 8 soient tournées vers la règle 1. Chaque carcasse 9 de forme circulaire présente un diamètre correspondant sensiblement à la largeur p/2 des ajours 4 et.des intervalles 5 entre les ajours 4 du ruban 3 constituant la règle 1.

De façon correspondante, la partie réceptrice 7 peut comprendre deux bobines 10, de même constitution que les bobines 8.

Les deux bobines émettrices 8 et les deux bobines réceptrices 10 se trouvent face à face, ces deux couples étant décalés d'une longueur de règle de p + p/2. De cette façon le défilement de la règle obture toujours l'émission haute fréquence sur un récepteur quand l'autre récepteur reçoit pleinement l'émission HF à travers un ajour.

Les deux bobines émettrices 8 sont alimentées par un générateur HF 12, de manière à émettre chacune un champ haute fréquence concentré sur les deux récepteurs 10 en regard. Lorsque la règle 1 défile selon la flèche 13, le signal pulsé haute fréquence reçu est modulé en amplitude par le passage des ajours 4 puis de leurs intervalles 5.

La figure 3a représente le signal induit dans la bobine réceptrice 10 de gauche sur les figures 1 et 2, en présence d'un ajour 4 entre une bobine réceptrice 10 et une bobine émettrice 8 correspondante. La figure 3b montre le signal résiduel induit dans la bobine réceptrice 10 de droite sur la figure 1, devant un intervalle 5, faisant écran, entre la bobine 10 et sa bobine 8 correspondante. La figure 3c montre le signal à haute fréquence modulé, induit dans chaque bobine réceptrice 10 lors du déplacement de la règle 1 suivant la flèche 13.

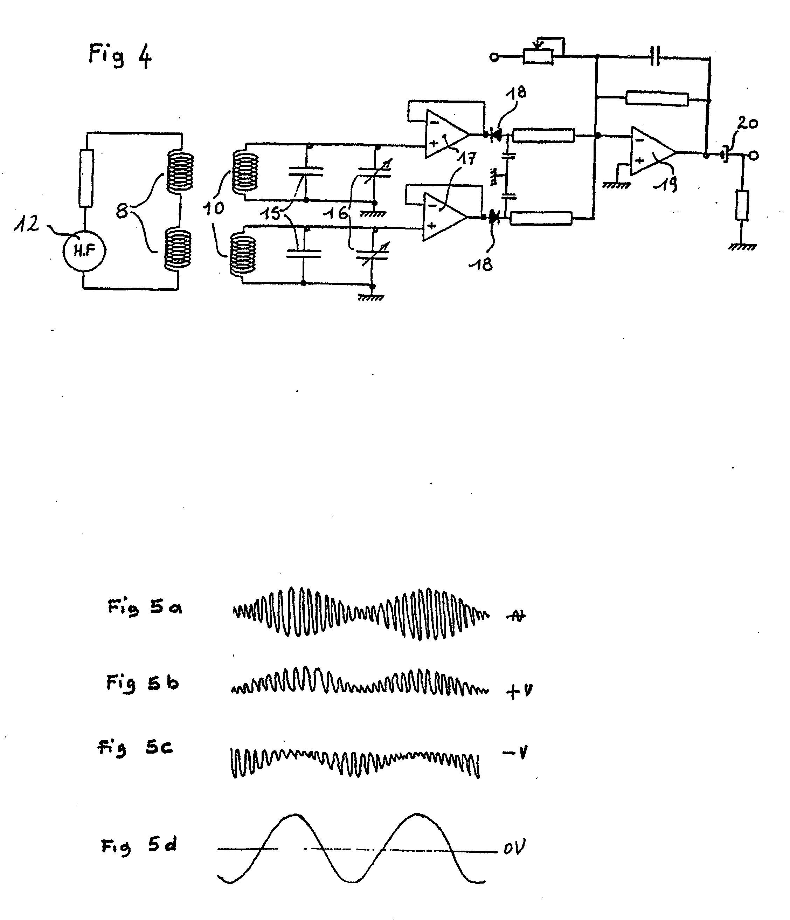

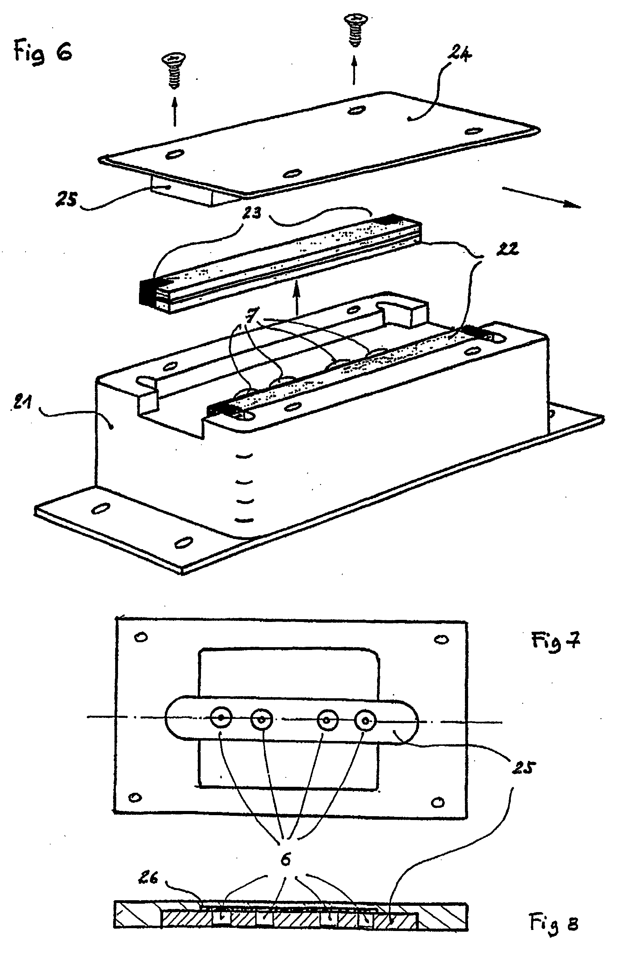

Les signaux des deux bobines réceptrices 10 sont envoyés séparément à un circuit de mise en forme 14 décrit plus en détail ci-après, selon les figures 4 et 5a à 5d.

Sur la figure 4, on retrouve un détecteur avec ses deux bobines émettrices 8 alimentées ici en série par le générateur à-haute-fréquence 12 et avec ses deux bobines réceptrices 10. Chaque bobine réceptrice 10 reçoit en parallèle une capacité 15 fixe pour accorder la bobine réceptrice 10 à la fréquence d'émission, c'est-à-dire à la fréquence du générateur 12, et une capacité réglable 16 qui permet d'établir la symétrie des niveaux de réception des deux bobines 10, malgré les disparités de fabrication entre les bobines, les disparités de géométrie de montage, etc... Ceci montre bien que la détection, explicitée dans la présente description, repose sur un principe de transmission radio HF et non pas sur un montage ferromagnétique. Le signal haute fréquence modulé selon la figure 3a de chaque bobine réceptrice 10 est transformé dans un amplificateur haute fréquence 17 en un signal alternatif modulé en amplitude, selon la figure 5a.

A la sortie de chaque amplificateur 17, le signal alternatif modulé est écrêté par une diode 18 à faible seuil.

Les figures 5b et 5c représentent les deux signaux haute fréquence modulés, écrêtés, décalés de 180° l'un par rapport à l'autre, et de polarités opposées par l'inversion des diodes 18.

Les deux signaux selon les figures 5b et 5c sont ensuite envoyés à un amplificateur de sommation 19 qui filtre la composante continue de ces signaux et, par sommation, permet d'obtenir un signal sinusoïdal alternatif démodulé, vrai et symétrique selon la figure 5d, qui peut être utilisé tel que ou, en cas de besoin, peut être envoyé à un interpolateur en vue d'une augmentation de la résolution de la mesure.

Les figures 6, 7 et 8 décrivent un moyen non limitatif de réaliser l'invention.

La figure 6 décrit un boîtier 21 qui rassemble des détecteurs 7 avec la partie électronique et les moyens de guidage 22 de la règle. Un couvercle 24 maintient dans leurs logements les deux glissières amovibles 22 réalisées en matière antifrottement et comportant une fente longitudinale pour guider la règle sur ses bords. La fente est renforcée, aux extrémités, contre le frottement de la règle sur sa tranche, par des cales métalliques 23.

La figure 7 est une vue de dessous du couvercle 24 qui montre une barrette intégrde 25, qui maintient les émetteurs 6 en regard des récepteurs 7, quand le couvercle 24 est fixé sur le boîtier 21.

La figure 8 est une coupe dudit couvercle 24, montrant les émetteurs 6 en place et alimentés en série ou en parallèle par un circuit imprimé 25. L'alimentation du circuit émetteur 25 par générateur haute fréquence se fait par des passages étanches, ménagés à travers le boîtier 21, et elle n'est pas représentée ici.

## Revendications

1. Dispositif de mesure incrémentale de déplacement et de position de deux objets mobiles en translation l'un par rapport à l'autre, comprenant une règle reliée à un des deux objets et constituée par un ruban métallique comprenant une graduation formée d'une rangée longitudinale d'ajours qui sont répartis suivant un pas p et qui présentent, dans le sens de la longueur de la règle, une dimension de p/2, un détecteur relié à l'autre desdits objets et explorant la graduation de la règle, ce détecteur comprenant deux parties situées sur les côtés opposés de la règle, et un circuit d'exploitation du signal de mesure du détecteur, **caractérisé par le fait que** le détecteur comprend un émetteur (6) disposé d'un côté de la règle (1) et comprenant au moins une bobine (8) comportant un bobinage disposé dans une carcasse circulaire (9), la ou chaque bobine (8) étant alimentée avec un signal électrique monotension pulsé à haute fréquence et adaptée pour produire un champ életromagnétique à haute fréquence concentré sur la règle, et un récepteur (7) disposé sur le côté opposé de la règle (1), en regard de la bobine (8) de l'émetteur (6) et adapté pour produire par induction un signal électrique haché à haute fréquence et modulé en amplitude par la règle (1) en déplacement, entre une amplitude élevée lorsqu'un ajour (4) de la règle se trouve entre la bobine (8) de l'émetteur (6) et le récepteur (7), et une amplitude faible lorsqu'un intervalle (5) entre deux ajours successifs (4) de la règle (1) se trouve entre la bobine (8) de l'émetteur (6) et le récepteur (7).

2. Dispositif de mesure suivant la revendication 1, **caractérisé en ce que** le récepteur (7) comprend au moins une bobine (10) disposée en regard de la bobine (8) de l'émetteur (6).

3. Dispositif suivant la revendication 1 ou 2, **caractérisé par le fait que** la règle (1) est constituée d'un ruban (3) en acier inoxydable.

4. Dispositif suivant l'une des revendications 2 ou 3, **caractérisé par le fait que** ladite carcasse circulaire (9) est constituée par un pot en ferrite dont la dimension, dans le sens de la longueur de la règle (1), correspond sensiblement à la dimension (p/2) des ajours dans le même sens.

5. Dispositif suivant l'une quelconque des revendications 2 à 4, **caractérisé par le fait que** les émetteurs comprennent chacun au moins deux bobinages montés électriquement en série et disposées dans des carcasses circulaires, de manière que les deux bobinages soient espacés, dans le sens de la longueur de la règle, d'une valeur n x p, n étant un nombre entier.

6. Dispositif suivant l'une des revendications 2 à 5, **caractérisé en ce que** chaque bobine réceptrice (10) reçoit en parallèle un moyen (15) d'accord à la fréquence d'émission et un moyen (16) d'établissement de la symétrie des niveaux de réception des deux bobines (10).

7. Dispositif suivant la revendication 6, **caractérisé en ce que** le moyen d'accord est une capacité fixe (15), alors que le moyen d'établissement de la symétrie est une capacité variable (16).

8. Dispositif suivant l'une quelconque des revendications 2 à 7, **caractérisé par le fait que** l'émetteur (6) et le récepteur (7) comprennent chacun deux bobines (8, 10) décalées dans le sens de la longueur de la règle (1) de n x p + p/2, n étant un nombre entier, de manière qu'un intervalle (5) entre deux ajours (4) successifs se trouve entre une bobine (8) de l'émetteur (6) et la bobine correspondante (10) du récepteur (7), lorsqu'un ajour (4) se trouve entre l'autre bobine (8) de l'émetteur (6) et la bobine correspondante (10) du récepteur (7) .

9. Dispositif suivant la revendication 8, **caractérisé par le fait que** les deux bobines (10) du récepteur (7) sont reliées chacune par un amplificateur (17) suivi d'un redresseur (18), à un amplificateur de sommation (19) fournissant, lors du déplacement longitudinal de la règle par rapport au détecteur, un signal de sortie alternatif sinusoïdal dont la fréquence est le double de la fréquence de modulation des signaux induits (10) dans les bobines du récepteur (7).

## Patentansprüche

1. Vorrichtung zur inkrementalen Messung der Verschiebung und der Position zweier beweglicher Gegenstände in Bewegung zueinander, die eine Skala umfaßt, die mit einem der zwei Gegenstände verbunden ist und die aus einem geformten metallischen Band besteht, welches eine Maßeinteilung durch eine Längsreihe von Löchern mit Abstand p und Durchmesser p/2 umfaßt, und einen Detektor, der mit dem anderen der beiden Gegenstände verbunden ist und der die Maßeinheit der Skala liest, dieser Detektor umfasst zwei Teile, welche sich an den entgegengesetzten Enden der Skala befinden und einen Schaltkreis zur Bestimmung des Meßsignals des Detektors, **dadurch gekennzeichnet, daß** der Detektor einen Sender (6) auf einer Seite der Skala umfasst, welcher mindestens eine Spuleinheit umfasst, die wiederum eine Spule (8) und ein kreisförmiges Gehäuse (9) umfasst, wobei jede Spule durch ein elektrisches Signal mit Monohochfrequenzspannung angetrieben wird um ein elektromagnetisches Hochfrequenzfeld konzentriert auf die Skala zu produzieren, und auf der hinsichtlich des Senders und der Spule gegenüberliegenden Seite der Skala einen Empfänger (7) umfasst, welcher dazu bestimmt ist, ein abgehacktes elektrisches Hochfrequenzsignal durch Induktion zu produzieren, dessen Amplitude durch die Verschiebung des Bandes folgendermassen moduliert wird : eine starke Amplitude wenn ein Loch der Skala sich zwischen der Spule (8) des Senders und des Detektors (7) befindet, und eine schwache Amplitude, wenn sich ein Intervall zweier sich folgenden Löecher zwischen der Spule (8) des Senders (6) und des Detektors (7) befindet.

2. Messvorrichtung nach Anspruch 1, dadurch charakterisiert, daß der Empfänger (7) mindestens eine Spule (10), die sich gegenüber der Spule (8) des Senders (6) befindet, umfaßt.

3. Messvorrichtung nach den Ansprüchen 1 oder 2, dadurch charakterisiert, daß die Skala (1) aus einem nichtrostendem Stahlband (3) besteht.

4. Messvorrichtung nach den Ansprüchen 2 oder 3, dadurch charakterisiert, daß das kreisförmige Gehäuse (9) aus einem Ferrittopf besteht, dessen Durchmesser längsweise zur Skala (1) , näeherungsweise dem Abstand p/2 der Löcher in der gleichen Richtung entspricht.

5. Messvorrichtung nach den Ansprüchen 2 bis 4, dadurch charakterisiert, daß jeder der Sender wenigstens zwei elektrisch in Serie geschaltete Spulen in dem kreisförmigem Gehäuse umfasst, wobei der Abstand der beiden Spulen, längsweise zur Skala, einen Wert von n x p aufweist, mit n als ganzzahligen Wert.

6. Messvorrichtung nach den Ansprüchen 2 bis 5, dadurch charakterisiert, daß jede empfangende Spule (10) ein parrallel geschaltetes Mittel (15), das ein Abstimmen der Sendefrequenz ermöglicht und ein parrallel geschaltetes Mittel (16) zur Herstellung der Symmetrie der Empfangsniveaus beider Spulen (10) aufweist.

7. Messvorrichtung nach Anspruch 6, dadurch charakterisiert, daß das Mittel zur Abstimmung (15) eine fixe Kapazität und das Mittel zur Herstellung der Symmetrie der Empfangsniveaus (16) eine varibale Kapazität ist.

8. Messvorrichtung nach den Ansprüchen 2 bis 7, dadurch charakterisiert, daß der Sender (6) und der Empfänger (7) jeweils 2 Spulen (8, 10) umfassen, welche längsweise zur Skala im Abstand n x p + p/2 mit n als ganzzahligen Wert verschoben sind, so daß ein Intervall (5) zweier sich folgender Löcher (4) sich zwischen einer Spule (8) des Senders (6) und eine entsprechenden Spule (10) des Empfängers (7) befindet wenn sich ein Loch (4) zwischen der anderen Spule (8) des Senders (6) und der entsprechenden Spule (10) des Empfängers (7) befindet.

9. Messvorrichtung nach Anspruch 8, dadurch charakterisiert, daß jede der zwei Spulen (10) des Empfängers (7) durch einen Verstärker (17) gefolgt von einem Gleichrichter (18) an einem Summierungsverstärker (19) verbunden sind, welcher bei einer längsseitigen Verschiebung der Skala hinsichtlich des Detektors, ein sinusfömiges alternatives Ausgangsignal liefert, dessen Frequenz das doppelte der Modulationsfrequenz der induzierten Signale (10) in den Spulen des Empfängers (7) entspricht.

## Claims

1. A device for the incremental measurement of displacement and position of two objects relatively movable in translation, comprising a scale connected to one of the two objects and consisting of a metal ribbon having a graduation formed by a longitudinal range of openings distributed with pitch p and which present, lengthwise along the scale, a dimension p/2, a detector connected to the other said objects, which explores the graduation on the scale, said detector comprising two parts situated on opposite sides of the scale, and a circuit for operating the detector measurement signal, **characterized in that** the detector comprises a transmitter (6) arranged on one side of the scale (1) and comprising at least one coil (8) , this coil or each one being housed in a circular pot core (9), and powered by a monovoltage high frequency pulsed electrical signal and designed to produce a high-frequency electromagnetic field concentrated on the scale , and a receiver (7) arranged on the opposite side of the scale (1), facing the transmitter (6) coil (8) and designed to emit a high frequency chopped electrique inductive signal , which is amplitude modulated by the scale (1) during displacements between a high amplitude, which occurs when an oppening (4) on the scale is passing between the coil (8) of the transmitter(6) and the receiver (7), and a low amplitude, which occurs when an intevral (5) , between two successives oppenings(4) on the scale (1), pass between the transmitter (6) coil (8) and the receiver (7).

2. Measurement device according to claim 1 **characterized in that** the receiver (7)comprises at least one coil (10) arranged facing the coil (8) of transmitter (6).

3. Device according to claim 1 or 2 **characterized in that** the scale consist of a stainless steel ribbon.

4. Device according to one of claims 2 or 3 **characterized in that** the said Circular pot core (9) consiste of ferrite whose dimension, in the lenghtwise direction of the scale (1), appreciably correspond to the dimension (p/2) of the openings along the same direction .

5. Device according to any claims 2 to 4, **characterized in that** each of the transmitters comprise at least two windings (8) electrically mounted in series and housed in circular pot cores, in such a way that the two windings are spaced, lengthwise along the scale, a distance of n x p appart, where n is an integer .

6. Device according to any of claims 2 to 5, **characterized in that** each receiver coil (10) has means (15) arranged in parallel for tuning the resonance with the transmission frequency and means (16) to adjust the symmetry of received signals on the two coils (10).

7. Device according to claim (6) **characterized in that** the tuning means is a fixed capacitor (15), and the means for establishind symmetry is a variable capacitor (16).

8. Device according to any of claims 2 to 7, **characterized in that** the transmitter (6) and the receiver (7) each comprise two coils (8,10) offset lengthwise along the scale (1) by n x p + p/2, where n is an integer, in such a way that the interval (5) between two successive openings (4) falls between a transmitter (6) coil (8) and the corresponding receiver (7) coil (10) whenever an opening (4) falls between the other transmitter (6) coil (8) and the corresponding receiver (7) coil (10) .

9. Device according to claim 8, **characterized in that** the two coils (10) of the receiver (7) are each connected by an amplifier (17) in series with a rectifier (18) to a summing amplifier (19) that supplies, during longitudinal movement of the scale relative to the detector, an alternating sinusoidal output signal, whose frequency is twice the modulated signal induced from coil (10) to the coil receiver (7).
